# EUROPEAN PATENT APPLICATION

(11) **EP 4 845 019 A1**
(43) Date of publication of application: **25.11.2026**
(21) Application number: 26179618.9
(22) Date of filing: 19.05.2026
(51) Int. Cl.: H02P 9/00, F03D 9/25

(54) **POWER CONVERTER FOR MINIMIZING COMMON MODE CURRENT FOR AN ELECTRIC MACHINE**

(30) Priority: 20.05.2025 US 202519213055
(71) Applicant: GE Vernova Infrastructure Technology LLC, Greenville, SC 29615 (US)
(72) Inventor: Nayak, Sougata, Bengaluru 560066 (IN); Jha, Kapil, Bengaluru 560066 (IN)
(74) Representative: Zimmermann & Partner Patentanwälte mbB

(57) **Abstract**

An electrical machine includes a stator, a rotor rotatable relative to the stator, and a power converter. The power converter includes a rotor side converter and a rotor filter electrically coupled between the rotor side converter and the rotor. The rotor filter includes a plurality of phase lines. The rotor filter also includes a plurality of common mode inductors configured to block a common mode current from flowing to the rotor when a frequency of the common mode current is greater than a frequency threshold. Each of the plurality of common mode inductors is connected to a respective phase line of the plurality of phase lines. In addition, the rotor filter includes a plurality of resistors configured to increase a common mode impedance of the rotor when the frequency of the common mode current is less than the frequency threshold. Each of the plurality of resistors connected to the respective phase lines of the plurality of phase lines.

## Description

### FIELD

The present disclosure relates generally to a power converter for an electric machine, such as a doubly-fed wind turbine generator, and more particularly, to a rotor filter configured to minimize common mode current for the electric machine.

### BACKGROUND

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known airfoil principles. For example, rotor blades typically have the cross-sectional profile of an airfoil such that, during operation, air flows over the blade producing a pressure difference between the sides. Consequently, a lift force, which is directed from a pressure side towards a suction side, acts on the blade. The lift force generates torque on the main rotor shaft, which is geared to a generator for producing electricity.

During operation, wind impacts the rotor blades and the rotor blades transform wind energy into a mechanical rotational torque that drives a low-speed shaft. The low-speed shaft is configured to drive the gearbox that subsequently steps up the low rotational speed of the low-speed shaft to drive a high-speed shaft at an increased rotational speed. The high-speed shaft is generally coupled to the generator so as to rotatably drive a generator rotor. As such, a rotating magnetic field may be induced by the generator rotor and a voltage may be induced within a generator stator. Rotational energy is converted into electrical energy through electromagnetic fields coupling the rotor and the stator, which is supplied to a power grid via a grid breaker. Thus, the main transformer steps up the voltage amplitude of the electrical power such that the transformed electrical power may be further transmitted to the power grid.

In some wind turbines, the generator may be electrically coupled to a bi-directional power converter that includes a rotor side converter joined to a line side converter via a regulated DC link. Such wind turbine power systems are generally referred to as a doubly-fed induction generator (DFIG). DFIG operation is typically characterized in that the rotor circuit is supplied with current from a current-regulated power converter. As such, the wind turbine produces variable mechanical torque due to variable wind speeds and the power converter ensures this torque is converted into an electrical output at the same frequency of the power grid.

Capacitive coupling between the generator rotor and the generator stator, though not the main contributor to the generated power, can induce an undesirable rotor shaft voltage in the generator rotor. In addition, high common mode voltage injected through the rotor side converter can potentially damage one or more bearings of the electrical power system through electromagnetic interference (EMI). Under normal operating conditions, the current driven by the rotor shaft voltage is safely dissipated through a ground brush that is in contact with the generator rotor and ground. Also, bearing insulation is provided between the bearing housing and a frame of the DFIG.

However, wear and tear impacts the conductivity of the ground brush as well as the insulating capability of the bearing insulation. As a result, if the ground brush loses contact with the generator rotor, voltage can build up on the rotor shaft. As the voltage builds up, it can discharge to ground using the lowest impedance path. For DFIGs, this path can correspond to the oil in the bearing housing. As such, the voltage can discharge in a pulse, thereby causing an arc. This cycle can be repeated as long as the ground brush is lifted, causing pitting and fluting of the bearing track which ultimately leads to bearing failure. Accordingly, common mode current needs to be minimized to reduce the likelihood of EMI-induced bearing damage.

In view of the foregoing, the present disclosure is directed to a power converter configured to minimize common mode current for an electric machine, such as a doubly-fed wind turbine generator.

### BRIEF DESCRIPTION

Aspects and advantages of the invention will be set forth in part in the following description, or may be obvious from the description, or may be learned through practice of the invention.

In an aspect, the present disclosure is directed to an electrical machine according to claim 1. The electrical machine includes a stator, a rotor rotatable relative to the stator, and a power converter. The power converter includes a rotor side converter and a rotor filter electrically coupled between the rotor side converter and the rotor. The rotor filter includes a plurality of phase lines. The rotor filter also includes a plurality of common mode inductors configured to block a common mode current from flowing to the rotor when a frequency of the common mode current is greater than a frequency threshold. Each of the plurality of common mode inductors is connected to a respective phase line of the plurality of phase lines. In addition, the rotor filter includes a plurality of resistors configured to increase a common mode impedance of the rotor when the frequency of the common mode current is less than the frequency threshold. Each of the plurality of resistors connected to the respective phase lines of the plurality of phase lines.

In an aspect, the present disclosure is directed to a power converter for an electrical machine according to claim 9. The power converter includes a rotor side converter and a rotor filter electrically coupled to the rotor side converter. The rotor filter includes a plurality of phase lines. The rotor filter also includes a plurality of common mode inductors configured to block a common mode current from flowing to the electrical machine when a frequency of the common mode current is greater than a frequency threshold. Each of the plurality of common mode inductors connected to a respective phase line of the plurality of phase lines. In addition, the rotor filter includes a plurality of resistors configured to increase common mode impedance of the electrical machine when the frequency of the common mode current is less than the frequency threshold. Each of the plurality of resistors connected to the respective phase lines of the plurality of phase lines.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an embodiment of a wind turbine according to the present disclosure;
FIG. 2 illustrates a simplified, internal view of an embodiment of a nacelle according to the present disclosure;
FIG. 3 illustrates a schematic view of an embodiment of a wind turbine electrical power system suitable for use with the wind turbine shown in FIG. 1;
FIG. 4 illustrates a schematic view of an embodiment of a wind farm having a plurality of wind turbines according to the present disclosure;
FIG. 5 illustrates a block diagram of an embodiment of a controller according to the present disclosure;
FIG. 6 illustrates a one-line diagram of an embodiment of a rotor filter according to the present disclosure; and
FIG. 7 illustrates an example plot representing an exemplary rotor impedance imposed by the common mode filter shown in FIG. 6.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Electrical machines (i.e., electrical generators and motors) utilize bearings to support rotation of the rotor relative to the stator. These bearings are prone to damage caused by stray current flow through the bearings. Specifically, in operation of the electrical machine, voltages are induced across parasitic capacitances in the machine, thereby resulting in stray current flow in the rotor. This current flow induces a voltage on the bearing component connected to the rotor. The bearings are typically constructed as an inner race, an outer race, and roller elements between the inner and outer races. One of the races is mounted on the rotor shaft and the other race is stationarily fixed, e.g., to the stator or machine frame. A lubricating film is provided between the bearing components. When the voltage induced on the rotor bearing component exceeds the breakdown strength of the lubricating film, current is discharged through the bearing to the stator or machine housing, resulting in damage to the bearing.

The stray current noted above is particularly relevant when the machine windings (stator or rotor) are supplied with current from electronic switching elements in a converter (i.e. a frequency converter). As the switching elements turn on and off, the voltages across the parasitic capacitances continuously change, which leads to the stray current flow in the rotor discussed above. Electrical generators in a wind turbine that are controlled by a pulse width modulation (PWM) converter are prone to this issue and have experienced early generator bearing failures therefrom.

It is known to provide the bearings of electrical machines with insulation (typically a ceramic layer on the inner or outer race, or ceramic roller elements) to minimize the bearing currents. It is also known to ground the rotor via grounding brushes. These solutions, however, are expensive, not always effective, and require maintenance and continuous component replacement.

In view of the foregoing, the present disclosure is directed to a power converter configured to minimize common mode current for an electric machine, such as a doubly-fed wind turbine generator. In particular, the power converter of the present disclosure includes a common mode filter (also referred to herein as a rotor filter) electrically coupled to a rotor of the electric machine and a rotor side converter of the power converter. The rotor filter includes a plurality of common mode inductors connected to respective phase lines of the electric machine, and a plurality of resistors connected to the respective phase lines of the electric machine. In embodiments, each of the plurality of common mode inductors are connected to the respective phase lines in series, and each of the plurality of resistors are connected to the respective phase lines in parallel with a respective common mode inductor. Further, the common mode inductors are configured to block a common mode current from flowing to the rotor when a frequency of the common mode current is greater than a frequency threshold. In addition, the resistors are configured to increase common mode impedance of the rotor when the frequency of the common mode current is less than the frequency threshold. As such, the rotor filter can reduce the common mode current injected by the power converter during operation of the electric machine, which can reduce a likelihood of EMI-induced bearing damage.

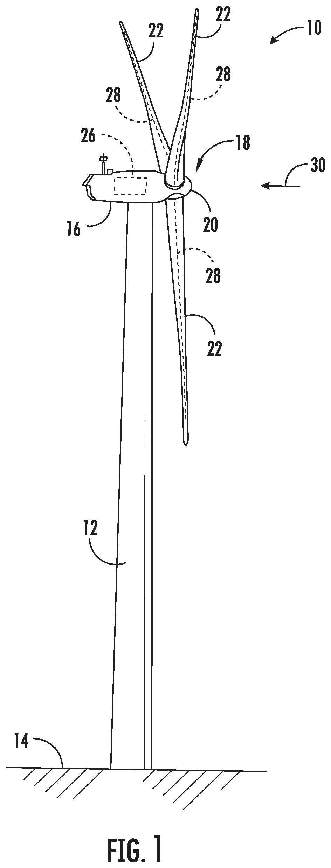

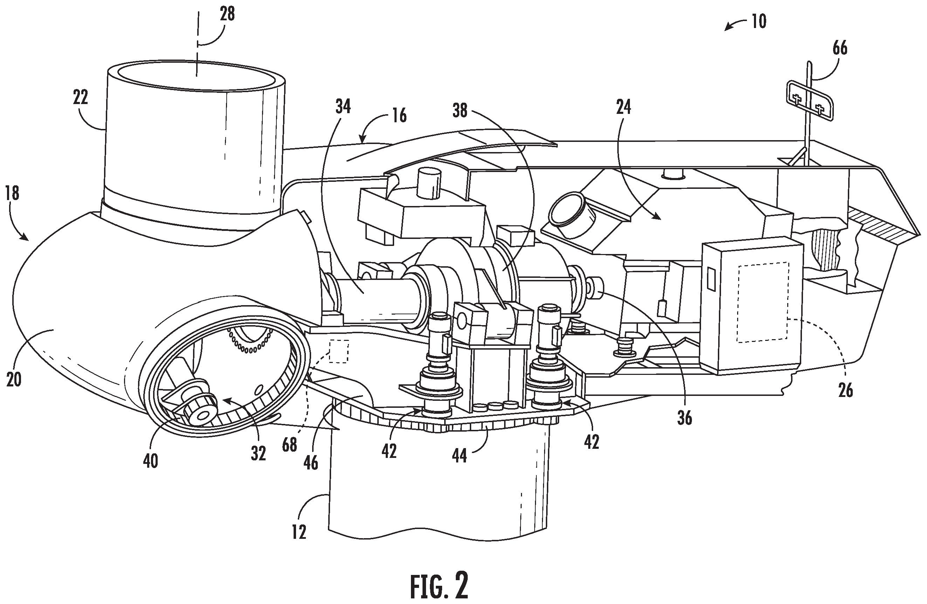

Referring now to the drawings, FIG. 1 illustrates a perspective view of an embodiment of a wind turbine 10 according to the present disclosure. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced.

The wind turbine 10 may also include a wind turbine controller 26 centralized within the nacelle 16. However, in other embodiments, the controller 26 may be located within any other component of the wind turbine 10 or at a location outside the wind turbine 10. Further, the controller 26 may be communicatively coupled to any number of the components of the wind turbine 10 in order to control the operation of such components and/or implement a corrective or control action. As such, the controller 26 may include a computer or other suitable processing unit. Thus, in several embodiments, the controller 26 may include suitable computer-readable instructions that, when implemented, configure the controller 26 to perform various different functions, such as receiving, transmitting and/or executing wind turbine control signals. Accordingly, the controller 26 may generally be configured to control the various operating modes (e.g., start-up or shut-down sequences), de-rating or up-rating the wind turbine, and/or individual components of the wind turbine 10.

Referring now to FIG. 2, a simplified, internal view of an embodiment of the nacelle 16 of the wind turbine 10 shown in FIG. 1 is illustrated. As shown, a generator 24 may be disposed within the nacelle 16 and supported atop a bedplate 46. In general, the generator 24 may be coupled to the rotor 18 for producing electrical power from the rotational energy generated by the rotor 18. For example, as shown in the illustrated embodiment, the rotor 18 may include a rotor shaft 34 coupled to the hub 20 for rotation therewith. The rotor shaft 34 may, in turn, be rotatably coupled to a generator shaft 36 of the generator 24 through a gearbox 38. As is generally understood, the rotor shaft 34 may provide a low speed, high torque input to the gearbox 38 in response to rotation of the rotor blades 22 and the hub 20. The gearbox 38 may then be configured to convert the low speed, high torque input to a high speed, low torque output to drive the generator shaft 36 and, thus, the generator 24.

The wind turbine 10 may also one or more pitch drive mechanisms 32 communicatively coupled to the wind turbine controller 26, with each pitch adjustment mechanism(s) 32 being configured to rotate a pitch bearing 40 and thus the individual rotor blade(s) 22 about its respective pitch axis 28. In addition, as shown, the wind turbine 10 may include one or more yaw drive mechanisms 42 configured to change the angle of the nacelle 16 relative to the wind (e.g., by engaging a yaw bearing 44 of the wind turbine 10 that is arranged between the nacelle 16 and the tower 12 of the wind turbine 10).

In addition, the wind turbine 10 may also include one or more sensors 66, 68 for monitoring various wind conditions of the wind turbine 10. For example, the incoming wind direction 52, wind speed, or any other suitable wind condition near the wind turbine 10 may be measured, such as through use of a suitable weather sensor 66. Suitable weather sensors may include, for example, light detection and ranging devices, sonic detection and ranging devices, anemometers, wind vanes, barometers, radio detection and ranging devices or any other sensing device which can provide wind directional information now known or later developed in the art. Still further sensors 68 may be utilized to measure additional operating parameters of the wind turbine 10, such as voltage, current, vibration, etc. as described herein.

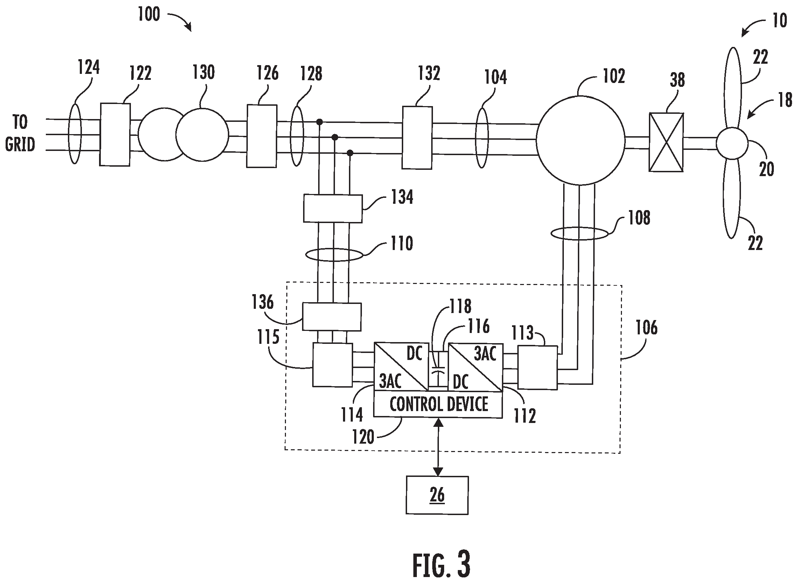

Referring now to FIG. 3, a schematic diagram of an embodiment of a wind turbine power system 100 is illustrated in accordance with aspects of the present disclosure. Although the present disclosure will generally be described herein with reference to the system 100 shown in FIG. 3, those of ordinary skill in the art, using the disclosures provided herein, should understand that aspects of the present disclosure may also be applicable in other power generation systems, and, as mentioned above, that the invention is not limited to wind turbine systems.

In the embodiment of FIG. 3 and as mentioned, the rotor 18 of the wind turbine 10 (FIG. 1) may, optionally, be coupled to the gearbox 38, which is, in turn, coupled to a generator 102, which may be a doubly fed induction generator (DFIG). As shown, the generator 102 may be connected to a stator bus 104. Further, as shown, a power converter 106 may be connected to the generator 102 via a rotor bus 108, and to the stator bus 104 via a line side bus 110. As such, the stator bus 104 may provide an output multiphase power (e.g., three-phase power) from a stator of the generator 102, and the rotor bus 108 may provide an output multiphase power (e.g., three-phase power) from a rotor of the generator 102. The power converter 106 may also include a rotor side converter (RSC) 112 and a line side converter (LSC) 114. Further, as shown, the power converter 106 includes a rotor filter 113 (which may also be referred to as a common mode filter) that is electrically coupled to the generator 102 via the rotor bus 108. Furthermore, the rotor filter 113 is electrically coupled to the RSC 112 (e.g., via a rotor filter bus). Moreover, as shown, the power converter 106 may include a line filter 115 electrically coupled to the LSC 114 (e.g., via a line filter bus) and to a line contactor 136. Additionally, the RSC 112 is coupled to the LSC 114 via a DC link 116 across which is a DC link capacitor 118. The LSC 114 is, in turn, coupled to the line side bus 110.

The RSC 112 and the LSC 114 may be configured for normal operating mode in a three-phase, PWM arrangement using one or more switching devices, such as insulated gate bipolar transistor (IGBT) switching elements. In addition, the power converter 106 may be coupled to a converter controller 120 in order to control the operation of the rotor side converter 112 and/or the line side converter 114 as described herein. It should be noted that the converter controller 120 may be configured as an interface between the power converter 106 and the turbine controller 26 and may include any number of control devices.

In typical configurations, various line contactors and circuit breakers including, for example, a grid breaker 122 may also be included for isolating the various components as necessary for normal operation of the generator 102 during connection to and disconnection from a load, such as the power grid 124. For example, a system circuit breaker 126 may couple a system bus 128 to a transformer 130, which may be coupled to the power grid 124 via the grid breaker 122. In alternative embodiments, fuses may replace some or all of the circuit breakers.

In operation, alternating current power generated at the generator 102 by rotating the rotor 18 is provided to the power grid 124 via dual paths defined by the stator bus 104 and the rotor bus 108. On the rotor bus side 108, sinusoidal multi-phase (e.g., three-phase) alternating current (AC) power is provided to the power converter 106. The rotor side converter 112 converts the AC power provided from the rotor bus 108 into direct current (DC) power and provides the DC power to the DC link 116. As is generally understood, switching elements (e.g., IGBTs) used in the bridge circuits of the rotor side converter 112 may be modulated to convert the AC power provided from the rotor bus 108 into DC power suitable for the DC link 116.

In addition, the line side converter 114 converts the DC power on the DC link 116 into AC output power suitable for the power grid 124. In particular, switching elements (e.g., IGBTs) used in bridge circuits of the line side converter 114 can be modulated to convert the DC power on the DC link 116 into AC power on the line side bus 110. The AC power from the power converter 106 can be combined with the power from the stator of generator 102 to provide multi-phase power (e.g., three-phase power) having a frequency maintained substantially at the frequency of the power grid 124 (e.g., 50 Hz or 60 Hz).

Additionally, various circuit breakers and switches, such as grid breaker 122, system circuit breaker 126, stator sync switch 132, converter breaker 134, and the line contactor 136 may be included in the wind turbine power system 100 to connect or disconnect corresponding buses, for example, when current flow is excessive and may damage components of the wind turbine power system 100 or for other operational considerations. Additional protection components may also be included in the wind turbine power system 100.

Moreover, the power converter 106 may receive control signals from, for instance, the local control system via the converter controller 120. The control signals may be based, among other things, on sensed states or operating characteristics of the wind turbine power system 100. Typically, the control signals provide control of the operation of the power converter 106. For example, feedback in the form of a sensed speed of the generator 102 may be used to control the conversion of the output power from the rotor bus 108 to maintain a proper and balanced multi-phase (e.g., three-phase) power supply. Other feedback from other sensors may also be used by the controller(s) 120, 26 to control the power converter 106, including, for example, stator and rotor bus voltages and current feedbacks. Using the various forms of feedback information, switching control signals (e.g., gate timing commands for IGBTs), stator synchronizing control signals, and circuit breaker signals may be generated.

The power converter 106 also compensates or adjusts the frequency of the three-phase power from the rotor for changes, for example, in the wind speed at the hub 20 and the rotor blades 22. Therefore, mechanical and electrical rotor frequencies are decoupled, and the electrical stator frequency is substantially independent of the mechanical rotor speed.

Under some states, the bi-directional characteristics of the power converter 106, and specifically, the bi-directional characteristics of the LSC 114 and RSC 112, facilitate feeding back at least some of the generated electrical power into the generator rotor. More specifically, electrical power may be transmitted from the stator bus 104 to the line side bus 110 and subsequently through the line contactor 136 and into the power converter 106, specifically the LSC 114 which acts as a rectifier and rectifies the sinusoidal, three-phase AC power to DC power. The DC power is transmitted into the DC link 116. The capacitor 118 facilitates mitigating DC link voltage amplitude variations by facilitating mitigation of a DC ripple sometimes associated with three-phase AC rectification.

The DC power is subsequently transmitted to the RSC 112 that converts the DC electrical power to a three-phase, sinusoidal AC electrical power by adjusting voltages, currents, and frequencies. This conversion is monitored and controlled via the converter controller 120. The converted AC power is transmitted from the RSC 112 via rotor filter 113 and the rotor bus 108 to the generator rotor. In this manner, generator active and reactive power control, or other controls, are facilitated by controlling rotor current and voltage.

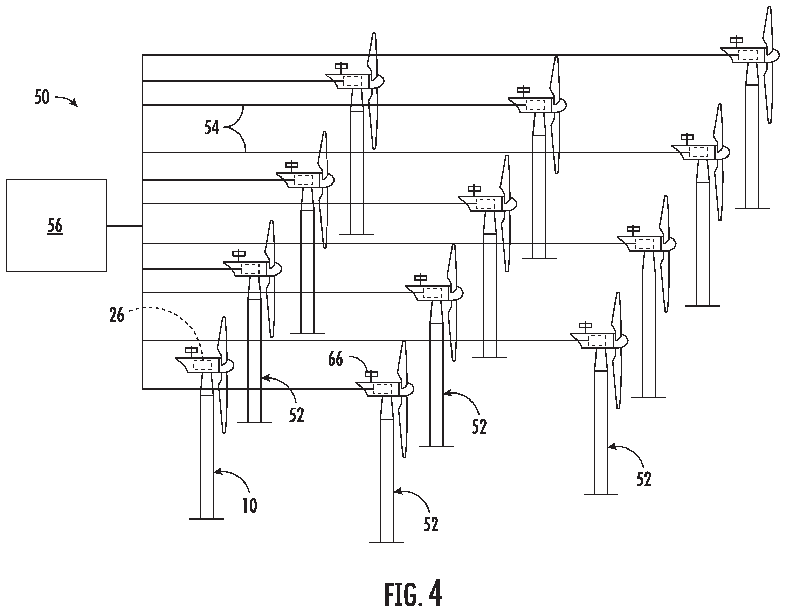

Referring now to FIG. 4, the wind turbine power system 100 described herein may be part of a wind farm 50. As shown, the wind farm 50 may include a plurality of wind turbines 52, including the wind turbine 10 described above, and an overall farm-level controller 56. For example, as shown in the illustrated embodiment, the wind farm 50 includes twelve wind turbines, including wind turbine 10. However, in other embodiments, the wind farm 50 may include any other number of wind turbines, such as less than twelve wind turbines or greater than twelve wind turbines. In an embodiment, the turbine controllers of the plurality of wind turbines 52 are communicatively coupled to the farm-level controller 56, e.g., through a wired connection, such as by connecting the turbine controller 26 through suitable communicative links 54 (e.g., a suitable cable). Alternatively, the turbine controllers may be communicatively coupled to the farm-level controller 56 through a wireless connection, such as by using any suitable wireless communications protocol known in the art. In further embodiments, the farm-level controller 56 is configured to send and receive control signals to and from the various wind turbines 52, such as for example, distributing real and/or reactive power demands or voltage reference commands across the wind turbines 52 of the wind farm 50.

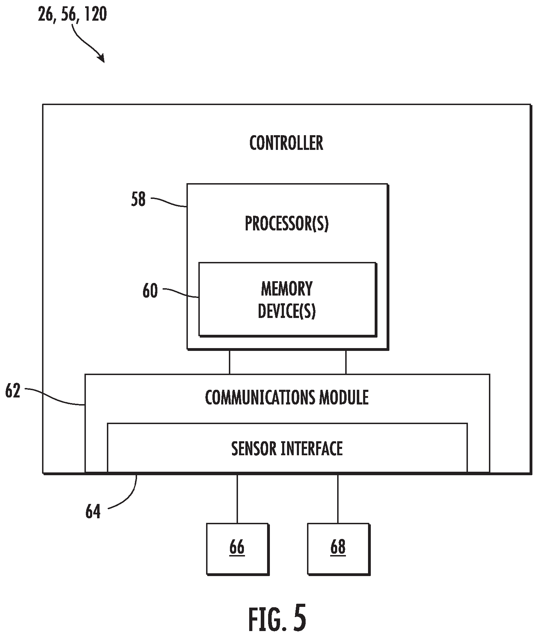

Referring now to FIG. 5, a block diagram of an embodiment of suitable components that may be included within the controller (such as any one of the converter controller 120, the turbine controller 26, and/or the farm-level controller 56 described herein) in accordance with example aspects of the present disclosure is illustrated. As shown, the controller may include one or more processor(s) 58, computer, or other suitable processing unit and associated memory device(s) 60 that may include suitable computer-readable instructions that, when implemented, configure the controller to perform various different functions, such as receiving, transmitting and/or executing wind turbine control signals (e.g., performing the methods, steps, calculations and the like disclosed herein).

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 60 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements.

Such memory device(s) 60 may generally be configured to store suitable computer-readable instructions that, when implemented by the processor(s) 58, configure the controller to perform various functions as described herein. Additionally, the controller may also include a communications interface 62 to facilitate communications between the controller and the various components of the wind turbine 10. An interface can include one or more circuits, terminals, pins, contacts, conductors, or other components for sending and receiving control signals. Moreover, the controller may include a sensor interface 64 (e.g., one or more analog-to-digital converters) to permit signals transmitted from the sensors 66, 68 to be converted into signals that can be understood and processed by the processor(s) 58.

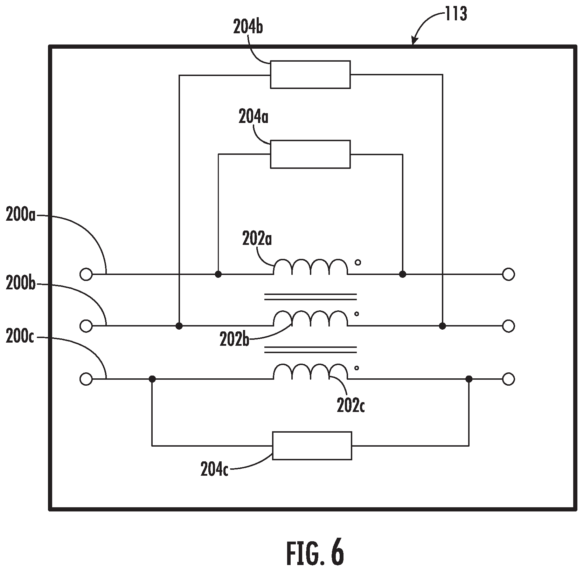

Referring now to FIG. 6, a schematic diagram of an embodiment of the rotor filter 113 according to the present disclosure is illustrated. As mentioned above, in some embodiments, three-phase, sinusoidal AC electrical power can be provided from the RSC 112 to the rotor filter 113 to facilitate feeding back at least some of the generated electrical power into the generator rotor. More particularly, the RSC 112 may include three phase lines (FIG. 3) each configured to provide one phase of the converted AC electrical power to the rotor filter 113. In turn, the rotor filter 113 can output three-phase, filtered AC electrical power to the rotor bus 108. As such, the rotor bus 108 may also include three phase lines (FIG. 3) each configured to receive one phase of the filtered AC electrical power from the rotor filter 113.

In embodiments, the rotor filter 113 is configured to reduce a common mode current output by the RSC 112 due to actuation of the switching elements of the RSC 112. For instance, the rotor filter 113 includes a plurality of phase lines 200a, 200b, 200c configured to receive the converted AC electrical power from the RSC 112 and to output filtered AC electrical power to the rotor bus 108. More particularly, as shown, the rotor filter 113 may include three phase lines 200a, 200b, 200c each connected to a respective one of the three phase lines of the RSC 112 and to a respective one of the three phase lines of the rotor bus 108.

Still referring to FIG. 6, the rotor filter 113 includes a plurality of common mode inductors 202a, 202b, 202c, which may sometimes be referred to as common mode chokes. More particularly, as shown, the rotor filter 113 may include three common mode inductors 202a, 202b, 202c. Each common mode inductor 202a, 202b, 202c may be connected in series with a respective one of the three phase lines 200a, 200b, 200c, as shown. Furthermore, the common mode inductors 202a, 202b, 202c may be formed of a same material, such as a ferrite material.

In embodiments, each of the common mode inductors 202a, 202b, 202c may have a same inductance (e.g., 120 microhenrys (µH)). More particularly, the inductance of common mode inductors 202a, 202b, 202c is selected to block the common mode current from flowing to the rotor 108 when a frequency of the common mode current is greater than a frequency threshold. Further, the inductance of common mode inductors 202a, 202b, 202c is selected to permit the common mode current to flow to the rotor 108 when the frequency of the common mode current is less than or equal to the frequency threshold. In addition, the common mode inductors 202a, 202b, 202c may be configured to increase common mode impedance of the rotor 108 when the frequency of the common mode current is greater than the frequency threshold. The frequency threshold can be a predetermined frequency (e.g., 10⁵ Hertz (Hz)) that is determined based on desired operations and/or design parameters of the generator 102.

Moreover, the rotor filter 113 includes a plurality of resistors 204a, 204b, 204c. More particularly, as shown, the rotor filter 113 may include three resistors 204a, 204b, 204c. Each resistor 204a, 204b, 204c may be connected to the respective one of the three phase lines 200a, 200b, 200c in parallel with a respective one of the common mode inductors 202, as shown in FIG. 6. In embodiments, each of the resistors 204a, 204b, 204c may have a same resistance (e.g., 100 ohms). More particularly, the resistance of the resistors 204a, 204b, 204c is selected to increase the common mode impedance of the rotor 108 when the frequency of the common mode current is less than the frequency threshold.

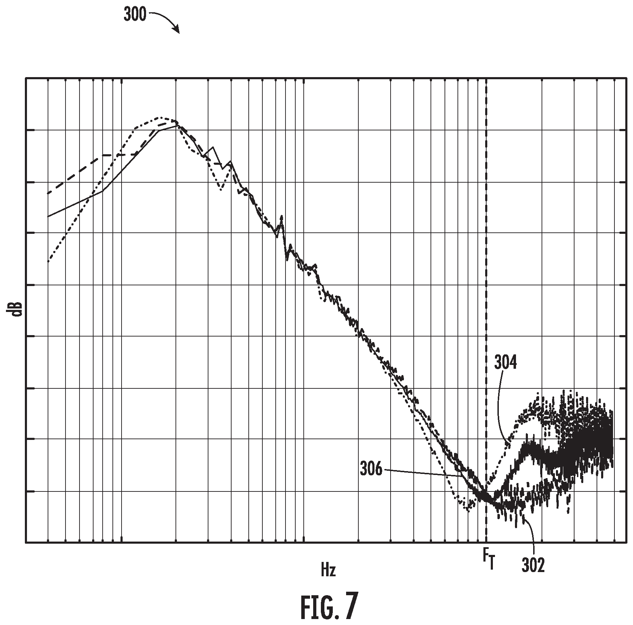

As an illustrative example, FIG. 7 depicts an embodiment of a plot 300 of a rotor common mode impedance curve according to the present disclosure. The plot 300 depicts the rotor common mode impedance represented in decibels (dB) (y-axis) over a frequency (Hz) of a common mode current (x-axis). The plot 300 further depicts a frequency threshold Fₜ, as shown. The plot 00 includes a first curve 302 representing the rotor common mode impedance without a rotor filter, a second curve 304 representing the rotor common mode impedance with a rotor filter including inductors but lacking resistors arranged in parallel with the respective inductors, and a third curve 306 representing the rotor common mode impedance with the rotor filter 113 of the present disclosure. As shown, the rotor common mode impedance of the second curve 304 is greater than the rotor common mode impedance of the first curve 302 at frequencies greater than or equal to the frequency threshold Fₜ. As such, the inductors 202a, 202b, 202c can increase the rotor common mode impedance at and above the frequency threshold Fₜ.

However, as shown, the rotor common mode impedance of the second curve 304 is greater than the rotor common mode impedance of the first curve 302 at frequencies greater than or equal to the frequency threshold Fₜ. In addition, as shown, the rotor common mode impedance of the third curve 306 is greater than the rotor common mode impedance of the first curve 302 at frequencies greater than or equal to the frequency threshold Ft, and the rotor common mode impedance of the third curve 306 is greater than the rotor common mode impedance of the second curve 304 at frequencies less than the frequency threshold Fₜ. As such, connecting resistors 204 in parallel with the respective inductors 202a, 202b, 202c can increase the rotor common mode impedance below the frequency threshold Fₜ.

Hence, the rotor filter 113 of the present disclosure can increase the rotor common mode impedance across all frequencies. More particularly, the inductance of the inductors 202a, 202b, 202c can be selected so as to increase the rotor common mode impedance at and above the frequency threshold Ft, and the resistance of the resistors 204a, 204b, 204c can be selected so as to increase the rotor common mode impedance below the frequency threshold Fₜ. Accordingly, the rotor filter 113 of the present disclosure can increase a root mean square (RMS) rotor common mode impedance, which in turn decreases the common mode current output by the RSC 112 and thereby reduces a likelihood of EMI-induced bearing damage.

Further aspects of the invention are provided by the subject matter of the following clauses:

An electrical machine, comprising: a stator; a rotor rotatable relative to the stator; and a power converter comprising a rotor side converter and a rotor filter electrically coupled between the rotor side converter and the rotor, the rotor filter comprising: a plurality of phase lines; a plurality of common mode inductors configured to block a common mode current from flowing to the rotor when a frequency of the common mode current is greater than a frequency threshold, each of the plurality of common mode inductors connected to a respective phase line of the plurality of phase lines; and a plurality of resistors configured to increase a common mode impedance of the rotor when the frequency of the common mode current is less than the frequency threshold, each of the plurality of resistors connected to the respective phase lines of the plurality of phase lines.

The electrical machine of any preceding clause, wherein each of the plurality of common mode inductors is connected, in series, to one of the respective phase lines of the plurality of phase line.

The electrical machine of any preceding clause, wherein each of the plurality of resistors is connected, in parallel with a respective common mode inductor of the plurality of common mode inductors, to one of the respective phase lines of the plurality of phase lines.

The electrical machine of any preceding clause, wherein the plurality of common mode inductors are further configured to permit the common mode current to flow to the rotor when the frequency of the common mode current is less than the frequency threshold.

The electrical machine of any preceding clause, wherein each of the plurality of resistors has a same resistance.

The electrical machine of any preceding clause, wherein the plurality of common mode inductors are configured to increase a common mode impedance of the rotor when the frequency of the common mode current is greater than the frequency threshold.

The electrical machine of any preceding clause, wherein the plurality of common mode inductors are formed of a ferrite material.

The electrical machine of any preceding clause, wherein the power converter further comprises a line side converter electrically coupled to the rotor side converter and to the stator.

The electrical machine of any preceding clause, wherein the electric machine comprises a doubly-fed induction generator (DFIG).

A wind turbine, comprising the electrical machine of any preceding clause configured as an electric generator.

A power converter for an electrical machine, the power converter comprising: a rotor side converter and a rotor filter electrically coupled to the rotor side converter, the rotor filter comprising: a plurality of phase lines; a plurality of common mode inductors configured to block a common mode current from flowing to the electrical machine when a frequency of the common mode current is greater than a frequency threshold, each of the plurality of common mode inductors connected to a respective phase line of the plurality of phase lines; and a plurality of resistors configured to increase a common mode impedance of the electrical machine when the frequency of the common mode current is less than the frequency threshold, each of the plurality of resistors connected to the respective phase lines of the plurality of phase lines.

The power converter of any preceding clause, wherein each of the plurality of common mode inductors is connected, in series, to one of the respective phase lines of the plurality of phase line.

The power converter of any preceding clause, wherein each of the plurality of resistors is connected, in parallel with a respective common mode inductor of the plurality of common mode inductors, to one of the respective phase lines of the plurality of phase lines.

The power converter of any preceding clause, wherein the plurality of common mode inductors are further configured to permit the common mode current to flow to the electric machine when the frequency of the common mode current is less than the frequency threshold.

The power converter of any preceding clause, wherein each of the plurality of resistors has a same resistance.

The power converter of any preceding clause, wherein the plurality of common mode inductors are configured to increase a common mode impedance of the electrical machine when the frequency of the common mode current is greater than the frequency threshold.

The power converter of any preceding clause, wherein the plurality of common mode inductors are formed of a ferrite material.

The power converter of any preceding clause, wherein the electrical machine is a doubly-fed induction generator (DFIG) comprising a stator and a rotor comprising the plurality of phase lines, the rotor filter being electrically coupled to the rotor.

The power converter of any preceding clause, further comprising a line side converter electrically coupled to the rotor side converter and the stator.

A wind turbine, comprising the power converter of any preceding clause, wherein the electric machine is configured as an electric generator.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An electrical machine, comprising:
a stator;
a rotor rotatable relative to the stator; and
a power converter comprising a rotor side converter and a rotor filter electrically coupled between the rotor side converter and the rotor, the rotor filter comprising:
a plurality of phase lines;
a plurality of common mode inductors configured to block a common mode current from flowing to the rotor when a frequency of the common mode current is greater than a frequency threshold, each of the plurality of common mode inductors connected to a respective phase line of the plurality of phase lines; and
a plurality of resistors configured to increase a common mode impedance of the rotor when the frequency of the common mode current is less than the frequency threshold, each of the plurality of resistors connected to the respective phase lines of the plurality of phase lines.

2. The electrical machine of claim 1, wherein each of the plurality of common mode inductors is connected, in series, to one of the respective phase lines of the plurality of phase line, particularly wherein each of the plurality of resistors is connected, in parallel with a respective common mode inductor of the plurality of common mode inductors, to one of the respective phase lines of the plurality of phase lines.

3. The electrical machine of any one of claims 1 or 2, wherein the plurality of common mode inductors are further configured to permit the common mode current to flow to the rotor when the frequency of the common mode current is less than the frequency threshold.

4. The electrical machine of any one of claims 1 through 3, wherein each of the plurality of resistors has a same resistance.

5. The electrical machine of any one of claims 1 through 4, wherein the plurality of common mode inductors are configured to increase a common mode impedance of the rotor when the frequency of the common mode current is greater than the frequency threshold, particularly wherein the plurality of common mode inductors are formed of a ferrite material.

6. The electrical machine of any one of claims 1 through 5, wherein the power converter further comprises a line side converter electrically coupled to the rotor side converter and to the stator.

7. The electric machine of any one of claims 1 through 6, wherein the electric machine comprises a doubly-fed induction generator (DFIG).

8. A wind turbine, comprising the electrical machine of any one of claims 1 through 7 configured as an electric generator.

9. A power converter for an electrical machine, the power converter comprising:
a rotor side converter and a rotor filter electrically coupled to the rotor side converter, the rotor filter comprising:
a plurality of phase lines;
a plurality of common mode inductors configured to block a common mode current from flowing to the electrical machine when a frequency of the common mode current is greater than a frequency threshold, each of the plurality of common mode inductors connected to a respective phase line of the plurality of phase lines; and
a plurality of resistors configured to increase a common mode impedance of the electrical machine when the frequency of the common mode current is less than the frequency threshold, each of the plurality of resistors connected to the respective phase lines of the plurality of phase lines.

10. The power converter of claim 9, wherein each of the plurality of common mode inductors is connected, in series, to one of the respective phase lines of the plurality of phase line, particularly wherein each of the plurality of resistors is connected, in parallel with a respective common mode inductor of the plurality of common mode inductors, to one of the respective phase lines of the plurality of phase lines.

11. The power converter of any one of claims 9 or 10 , wherein the plurality of common mode inductors are further configured to permit the common mode current to flow to the electric machine when the frequency of the common mode current is less than the frequency threshold.

12. The power converter of any one of claims 9 through 11, wherein each of the plurality of resistors has a same resistance.

13. The power converter of any one of claims 9 through 12, wherein the plurality of common mode inductors are configured to increase a common mode impedance of the electrical machine when the frequency of the common mode current is greater than the frequency threshold, particularly wherein the plurality of common mode inductors are formed of a ferrite material.

14. The power converter of any one of claims 9 through 13, wherein the electrical machine is a doubly-fed induction generator (DFIG) comprising a stator and a rotor comprising the plurality of phase lines, the rotor filter being electrically coupled to the rotor, particularly further comprising a line side converter electrically coupled to the rotor side converter and the stator.

15. A wind turbine, comprising the power converter of any one of claims 9 through 14, wherein the electric machine is configured as an electric generator.
